# EUROPEAN PATENT SPECIFICATION

(11) **EP 1 361 752 B1**
(45) Date of publication and mention of the grant of the patent: **20.09.2006**
(21) Application number: 03252078.5
(22) Date of filing: 01.04.2003
(51) Int. Cl.: H04N 5/445

(54) **Television receiving apparatus with the capability of receiving text via the web**
Fernsehempfänger mit der Fähigkeit Text über das Netz zu empfangen
Téléviseur ayant la capacité de recevoir du texte via le web

(30) Priority: 02.05.2002 KR 2002024208
(43) Date of publication of application: 12.11.2003
(73) Proprietor: SAMSUNG ELECTRONICS CO., LTD., Suwon-si, Gyeonggi-do 442-742 (KR)
(72) Inventor: Noh, Young-joong, Daegu-city (KR)
(74) Representative: Geary, Stuart Lloyd

(56) References cited:
- EP-A- 0 818 925
- WO-A-98/17064
- WO-A-99/18718
- DE-A- 19 531 072
- GB-A- 2 326 789
- WERNER BRÜCKNER: "TeleWeb - teletext with internet connection" EBU TECHNICAL REVIEW, April 2002 (2002-04), pages 1/8-8/8, XP002258604
- PROFFIT B: "INTERCAST BRINGS THE WEB TO TV. A NEW TECHNOLOGY MAY CHANGE THE WAYYOU WATCH TELEVISION" PC MAGAZINE, A PC COMMUNICATION CORP. NEW YORK, US, 21 January 1997 (1997-01-21), pages 203-204, XP002053914 ISSN: 0888-8507

## Description

The present invention relates to a television receiving apparatus having an information service capability and comprising first and second tuners for receiving television broadcasts, decoder means for detecting and decoding information service signals, user input means and a controller and to method of operation of a television apparatus, the method comprising receiving a first television channel using a first tuner and a method of operation of a television apparatus comprising receiving a first television channel using a first tuner.

Teleweb is the next generation version of teletext and enables images and graphics to be displayed in addition to text information. Furthermore, teleweb is based on hyperlinks and a menu system, so teleweb has the advantage that users can use it with ease like the World Wide Web as well as it being applicable to both analogue and digital broadcasts.

In the case of an analogue television set, the teleweb data is coded as images and transmitted in the vertical blanking intervals of a television signal. In case of a digital television set, coded images are transmitted in MPEG-2 packets of digital video broadcasts (DVB). Therefore, news, weather, and stock information can be received in real time using teleweb.

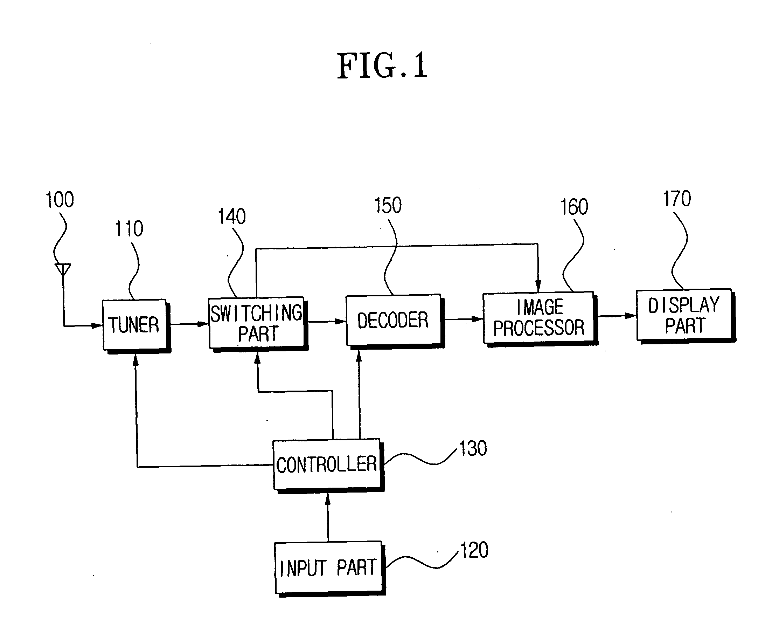

Figure 1 is a block diagram of a conventional teleweb-enabled television.

Referring to Figure 1, the teleweb-enabled television is connected to an antenna 100 and comprises a tuner 110, an input part 120, a controller 130, a switching part 140, a decoder 150, an image processor 160 and a display part 170. The tuner 110 tunes to broadcast signals received through the antenna 100. The switching part 140 receives signals from the tuner 110 according to a control signal from the controller 130 and switches broadcast signals to one output and teleweb information to another.

The input part 120 inputs command signals for controlling the controller 130. The controller 130 partially controls the tuner 110, the switching part 140, the decoder 150, the image processor 160 and the display part 170 based on the command signals from the input part 120. The decoder 150 detects and decodes teleweb information included in received broadcast signals according to a control signal from the controller 130. The image processor 160 processes the received television picture and teleweb information, decoded by the decoder 150, for displayed on the screen of the display part 170.

The input part 120 is provided with a mode selection key so that a mode selection signal can be input in order to enable selectively a broadcast mode in which the television picture is display and a teleweb mode in which teleweb information is displayed. When the broadcast mode is selected by means of the input part 120, the picture of a received broadcast signal is displayed on the screen and teleweb information is stored in a storage part (not shown).

When switching from broadcast mode to teleweb mode, the controller 130 controls the detection and decoding of teleweb information, included in the received broadcast signal, by the decoder 150. The image processor 160 processes teleweb information decoded in the decoder 150 for display on the screen of the display part 170. The teleweb information, which is processed in the image processor 160, is displayed on the screen of the display part 170.

The conventional teleweb-enabled television displays teleweb information on the screen of the display part 170 when switching to the teleweb mode during diplay of the normal programme picture, so the broadcasting program watching cannot be viewed. Generally, it takes about 30 seconds to download teleweb information. Accordingly, inconvenience is caused since users have to wait for the teleweb information to be received before it is displayed.

Furthermore, in order to check whether teleweb information is included in other channels in addition to teleweb information in the presently selected channel, the corresponding channel has to be tuned to and checked for teleweb information. Therefore, it takes a long time to search for a channel in which teleweb information is included, during which inconvenience is caused since users cannot watch the normal programme picture.

DE-A-19531072 proposes a television apparatus having two tuners so that teletext data can be stored while a television programme is being watched.

A television receiving apparatus according to the present invention is characterised by the information service capability being a teleweb capability, the presence of OSD means, and the controller being responsive to a signal from the user input means to cause the second tuner to scan a plurality of channels to search for teleweb information and cause the OSD means to display information relating to said scanning.

A method, according to the present invention, is characterised by receiving a user input, responding to the user input by sequentially tuning to each of a plurality of channels for a predetermined time interval, using a second tuner, while tuned to each of said plurality of channels, determining whether teleweb information is present, and generating as an OSD display including the numbers of the channels among said plurality of channels in which teleweb information was detected.

Additional preferred and optional features of the present invention are set forth in claims 2 to 7 and 9 to 12 appended hereto.

An embodiment of the present invention will now be described, by way of example, with reference to Figures 2 to 4d of the accompanying drawings, in which:
Figure 1 is a block diagram of a conventional teleweb-enabled television receiving apparatus;
Figure 2 is a block diagram of a teleweb-enabled television receiving apparatus according to the present invention;
Figure 3 is a flowchart illustrating a teleweb search method according to the present invention; and
Figure 4a to Figure 4d are views for showing the displayed images during searching for teleweb information channels and downloading of teleweb information.

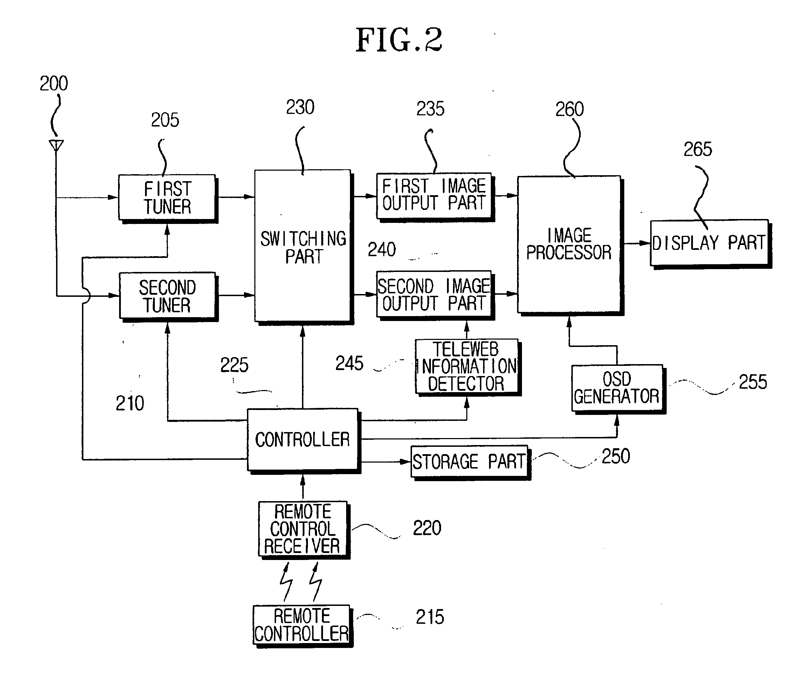

Referring to Figure 2, a teleweb-enabled television is connected to an antenna 200 and comprises a first tuner 205, a second tuner 210, a remote controller 215, a remote control receiver 220, a controller 225, a switching part 230, a first image output part 235, a second image output part 240, a teleweb information detector 245, a storage part 250, an OSD generator 255, an image processor 260 and a display part 265.

The first tuner 205 receives broadcast signals from the antenna 200 and tunes to a channel selected by a user.

The second tuner 210 scans through a plurality of channels, stopping on each for a predetermined time interval, according to a control signal from the controller 225 for searching for teleweb information channels.

The remote controller 215 can be used by a user to input a teleweb information channel search command and a selection command for selecting a teleweb information channel.

The remote control receiver 220 receives operation commands for the television from the remote controller 215.

The controller 225 controls the tuning operations of the first and second tuners 205, 210 and the overall operation of the television according to operation commands from the remote controller 215.

The switching part 230 selectively routes the signals output from the first tuner 205 and the second tuner 210 according to a control signal from the controller 225.

The first image output part 235 outputs the picture for a channel selected by a user.

The second image output part 240 outputs an image for a channel output by the second tuner 210 according to a control of the controller 225.

The teleweb information detector 245 determines whether teleweb-bearing channels exist among a plurality of channels from the signals output from the second image output part 240 according to a control of the controller 225.

The storage part 250 stores at least one channel which includes teleweb information detected by the teleweb information detector 245.

The OSD generator 255 generates an OSD image including the number of at least one channel for which teleweb information is stored in the storage part 250 according to a control of the controller 255.

The image processor 260 adds the OSD image from the OSD generator 255 to a first image signal output from the switching part 230 and outputs red (R), green (G), and blue (B) signals corresponding to the added image signal.

The display part 265 displays R, G, and B signals and a luminance signal Y output from the image processor 260 on a screen (not shown).

The remote controller 215 is provided with a mode selection key (not shown) by which a user selects a broadcast mode for watching a television programme and a teleweb mode for displaying teleweb information.

In the case that a user presses a key (not shown), provided on the remote controller 215, to select a particular channel, the first tuner 205 tunes to the selected channel. A first image signal, output from the first tuner 205, is displayed on the screen (not shown) following processing by the image processor 260. The audio signal of the selected channel is output to a speaker (not shown) via an audio processor (not shown).

If a teleweb information channel search command is received from a user during watching a television programme on a selected channel, the controller 225 outputs a control signal to initiate a tuning operation by the second tuner 210. Accordingly, the second tuner 210 scans sequentially through a plurality of channels including the channel tuned to by the first tuner 205. The teleweb information detector 245 detects at least one channel in which teleweb information is included from plural channels scanned by the second tuner 210.

The storage part 250 stores the numbers of the channels detected by the teleweb information detector 245. That is, the number of at least one channel in which teleweb information is included. The controller 225 controls the OSD generator 255 to generate an OSD display displaying the numbers of the channels in which teleweb information was detected.

The controller 225 controls the displaying of a teleweb information channel search progress status in a predetermined portion of the display part 165, if a teleweb information channel search operation is being performed in response to a teleweb information channel search command.

If a user inputs a selection command for the teleweb information of a particular channel shown in an OSD display, the controller 225 controls the second tuner 210 to tune to the channel corresponding to the selection command. Accordingly, the second tuner 210 does not tune through a plurality of channels but tunes only the particular channel, for example channel 3, which was selected by the user.

The teleweb information detector 245 detects the teleweb information included in a broadcast signal output from the second image output part 240 under the control of the controller 225, decodes the detected teleweb information and outputs an image signal corresponding to the teleweb information. In general, it takes about 30 seconds to download teleweb information. Therefore, the teleweb image signal is not immediately displayed on the screen of the display part 265. Instead, the picture of the signal, tuned to by the first tuner 205, continues to be displayed.

While downloading teleweb information, included in channels tuned to by the second tuner 210, the controller 225 controls the display of the picture of the channel tuned to by the first tuner 205. Preferably, the controller 225 controls the OSD generator 255 to implement as an OSD display the progress of downloading teleweb information included in channels tuned to by the second tuner 210 on the screen of the display part 265. An OSD display output from the OSD generator 255 is added to the picture of the channel, tuned to by the first tuner 205, to be displayed on the screen of the display part 265.

That is, in case of turning a general broadcast mode to a teleweb information mode, it is not immediately switched to the teleweb information mode so that a user can continue to watch a programme during downloading of teleweb information.

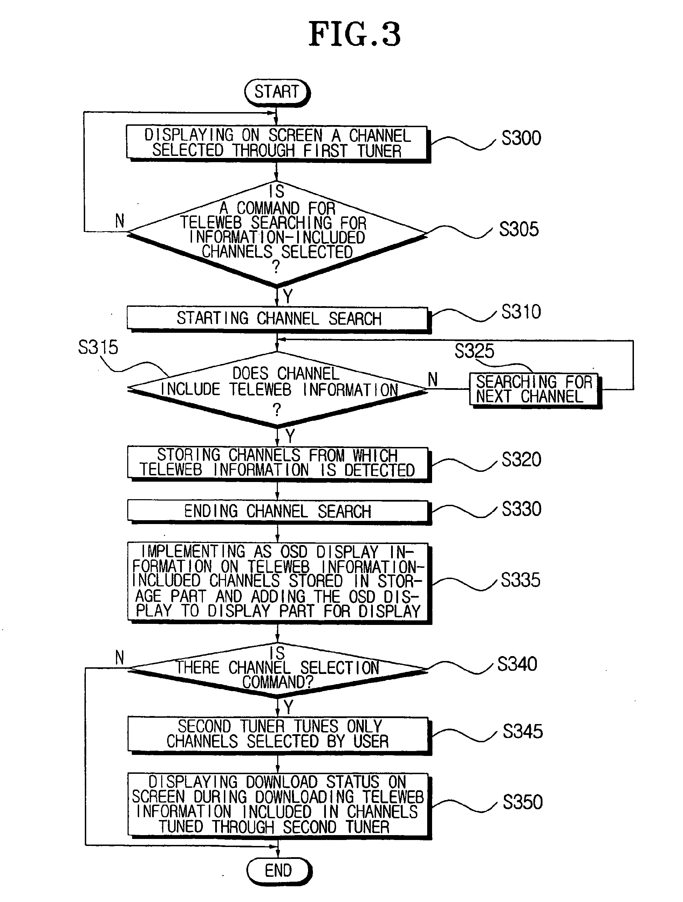

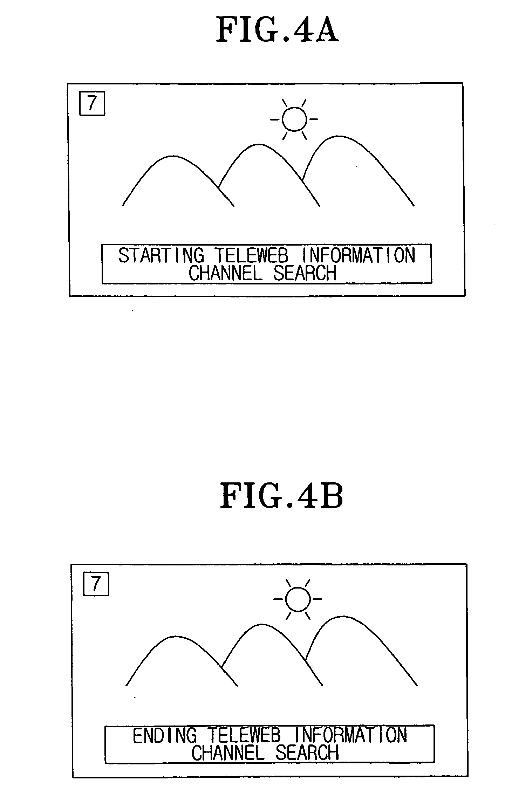

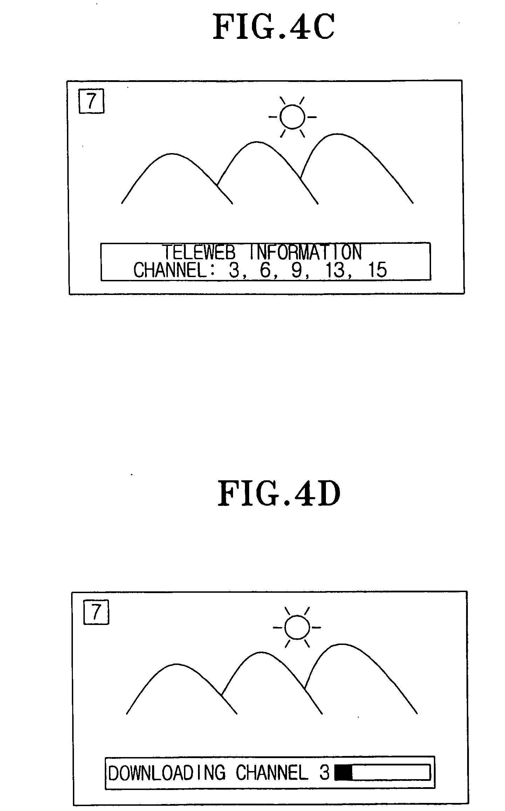

Hereinafter, a method for searching for teleweb information channels is described in detail with reference to Figure 3, and Figure 4a to Figure 4d.

When a user has selected a channel 7 and is watching the broadcast programme thereon (S300), if the user inputs a teleweb information channel search command to search for a channel including teleweb information (S305), the controller 225 outputs a control signal to the second tuner 210 to cause it to tune.

The second tuner 210 scans sequentially through a plurality of channels, stopping on each for a predetermined time interval, according to a control signal from the controller 225 (S310). While a teleweb information search is in progress, the OSD generator 255 generates an OSD display including a teleweb information channel search progress status. The display part 165 displays this in a certain portion of the screen. For example, as shown in Figure 4a, if a teleweb information channel search starts, the OSD display in a lower portion of the screen of the display part 165 indicates that a teleweb information channel search operation is going on.

The teleweb information detector 245 verifies respective channels sequentially tuned by the second tuner 210, and decides whether teleweb information is included in the respective channels(S315). If teleweb information exists on a corresponding channel as a result of the decision of the step S315, the teleweb information detector 245 stores in the storage part 250 at least one channel in which teleweb information is detected (S320).

Furthermore, if teleweb information does not exist in the corresponding channel as a result of the decision of the step S315, the teleweb information detector 245 searches for channels following the channel tuned to by the second tuner 210 (S325). As such, the teleweb information detector 245 verifies channels sequentially tuned to by the second tuner 210 and detects teleweb information-including channels among a plurality of channels. When the channel search for all the channels in which broadcast signals exist is complete (S330), the controller 225 controls the displaying of the completed status of the teleweb information search operation as shown in Figure 4b.

The controller 225 displays in an OSD display information corresponding to teleweb information-including channels stored in the storage part 250 and controls the addition of the OSD display to the image displayed by the display part 265 (S335). As shown in Figure 4a, the picture of the presently viewed channel '7' is displayed over the entire screen and information on the teleweb information channel detected by the teleweb information detector 245 is displayed in a lower portion of the screen of the display part 265.

In the meantime, information corresponding to a teleweb information channel, as shown in Figure 4a, is not displayed on the screen of the display part 265 after the channel search is completed, but can be displayed on the screen immediately after a teleweb information-included channel of plural channels is detected on the screen.

If a selection command for any one of channels from information on at least one teleweb information channels which are being displayed on the screen of the display part 265 is inputted by a user, the controller 225 controls the second tuner 210 to tune to the channel corresponding to the selection command. The second tuner 210 tunes a channel according to a control signal of the controller 225 (S345).

During downloading teleweb information included in a channel tuned to by the second tuner 210, the controller 225 controls the display so that the channel tuned to by the first tuner 205 is continuously displayed. That is, the controller 225 controls the first tuner 205 to tune a channel '7' and the second tuner 210 to tune a channel '3'.

Furthermore, the controller 225 does not immediately display teleweb information included in channel '3', tuned to by the second tuner 210, on the screen but controls storage of the teleweb information in the storage part 250. Therefore, as shown in Figure 4B, image information for channel '7', tuned to by the first tuner 205 is displayed on the screen of the display part 265. Teleweb information of channel '3', tuned to by the second tuner 210, is added for display to the screen of the display part 265 as in an OSD display in the lower centre of Figure 4b.

That is, the controller 225 controls an OSD display to show the progress of the process of downloading teleweb information included in channel '3' and displaying the OSD display on the screen of the display part 265. Accordingly, a viewer does not immediately watch teleweb information for a selected channel (channel '3'), but can verify the teleweb information, if displayed on the screen of the display part 265, after downloading is completed.

Accordingly, the problem of losing the picture of a programme before the telewen information is available is solved. That is, since teleweb information-including channels are searched through the second tuner 210 while a broadcasting programme viewing is viewed continuously by means of the first tuner 205, a user can continuously watch a broadcasting programme while performing a channel search function.

The present invention, when a user wants to watch teleweb information during watching of a broadcasting programme, uses multiple tuners, so that it is convenient and efficient since a user can continuously watch a broadcasting program viewing at present during searching for teleweb information channels.

Although the typical embodiment of the present invention has been described in detail, it will be understood by those skilled in the art to which the present invention pertains that the present invention can be diversely modified.

## Claims

1. A television receiving apparatus having an information service capability, the apparatus comprising first and second tuners (205, 210) for receiving television broadcasts, decoder means (245) for detecting and decoding information service signals, user input means (215, 220) and a controller (225), **characterised by**:
the information service capability being a teleweb capability,
the presence of OSD means, and
the controller (225) being responsive to a signal from the user input means (215, 220) to
cause the second tuner (210) to scan a plurality of channels to search for teleweb information and
cause the OSD means (255) to display information relating to said scanning.

2. An apparatus according to claim 1, wherein the controller (225) is responsive to a signal from the user input means (215, 220) to cause the second tuner (210) to tune to a particular channel for downloading teleweb information.

3. An apparatus according to claim 2, wherein the controller (225) is configured for causing the OSD means (255) to display information relating to said downloading.

4. An apparatus according to claim 1, comprising a storage part for storing the number of at least one channel in which teleweb information, detected by the decoder means (245), is included, wherein the controller (225) is responsive to a signal from the user input means (215, 220) to control the OSD means (255) to display the stored numbers of the channels in which teleweb information has been detected.

5. An apparatus according to claim 4, comprising a display part (265) for displaying image information for a channel tuned to by the first tuner (205) and the stored numbers of the channels in which teleweb information has been detected, wherein the controller (225) is configured to cause the OSD means (250) display a teleweb information channel search progress status in a predetermined portion of the screen of the display part (265) while searching for teleweb information.

6. An apparatus according to claim 5, wherein the controller (225) is responsive to a selection signal from the user input means (215, 220), while the numbers of the teleweb information containing channels are being displayed by the display part (265), to controls the second tuner (210) to tune the channel indicated by the selection signal.

7. An apparatus according to claim 6, wherein the controller (225) is configured to cause the OSD means (250) to display a teleweb information downloading status in in a predetermined portion of the screen of the display part (265) during downloading teleweb information included in a selected channel.

8. A method of operation of a television apparatus, the method comprising receiving a first television channel using a first tuner (205),
receiving a user input,
responding to the user input by sequentially tuning to each of a plurality of channels for a predetermined time interval using a second tuner (210); and being **characterised by** :
while said second tuner is tuned to each of said plurality of channels, determining whether teleweb information is present; and
generating as an OSD display including the numbers of the channels among said plurality of channels in which teleweb information was detected.

9. A method according to claim 8, comprising storing the numbers of the channels, in which teleweb information was detected, receiving a user input, and performing the generation of said OSD display in response to said user input, wherein said OSD display displays the stored channel numbers.

10. A method according to claim 8, including displaying teleweb information channel search progress status as an OSD display in a predetermined portion of the screen of the display part (265) during said sequential tuning.

11. A method according to claim 10, including receiving a selection user input, corresponding to a channel number displayed in said generated OSD display, and responding to the selection user input by tuning the second tuner (210) to the channel corresponding to the selected channel number.

12. A method according to claim 11, including displaying a teleweb information download status in a predetermined portion of the screen of the display part (265) during downloading of teleweb information included in the channel corresponding to the selection user input.

## Patentansprüche

1. Fernsehempfangsgerät mit einer InformationsdienstFähigkeit, wobei das Gerät einen ersten und einen zweiten Tuner (205, 210) zum Empfangen von Fernsehsendungen, Decodiermittel (245) zum Erfassen und Decodieren von Informationsservicesignalen, Benutzereingabemittel (215, 220) und einen Controller (225) umfasst, **dadurch gekennzeichnet,**
**dass** die Informationsdienstfähigkeit eine Teleweb-Fähigkeit ist,
**dass** OSD-Mittel vorhanden sind, und
**dass** der Controller (225) auf ein Signal von dem Benutzereingabemittel (215, 220) reagiert, um
zu bewirken, dass der zweite Tuner (210) eine Vielzahl von Kanälen abtastet, um nach Teleweb-Information zu suchen und
zu bewirken, dass ein OSD-Mittel (255) Information in Zusammenhang mit dem Abtasten anzeigen.

2. Gerät nach Anspruch 1, wobei der Controller (225) auf ein Signal von dem Benutzereineingabemittel (215, 220) reagiert, um zu bewirken, dass der zweite Tuner (210) auf einen bestimmten Kanal zum Downloaden von Teleweb-Information fein abstimmt.

3. Gerät nach Anspruch 2, wobei der Controller (225) konfiguriert ist, um zu bewirken, dass das OSD-Mittel (255) Informationen in Zusammenhang mit dem Downloaden anzeigt.

4. Gerät nach Anspruch 1, das einen Speicherteil zum Speichern der Nummer von mindestens einem Kanal umfasst, in dem Teleweb-Information, die von dem Decodiermittel (245) erfasst wird, enthalten ist, wobei der Controller (225) auf ein Signal von dem Benutzereingabemittel (215, 220) reagiert, um das OSD-Mittel (255) zu steuern, um die gespeicherten Nummern von Kanälen, in welchen Teleweb-Information erfasst wurde, anzuzeigen.

5. Gerät nach Anspruch 4, das einen Displayteil (265) zum Anzeigen von Bildinformation für einen Kanal aufweist, auf den der erste Tuner (205) fein abgestimmt ist, und die gespeicherten Nummern von Kanälen, in welchen Teleweb-Information erfasst wurde, wobei der Controller (225) konfiguriert ist, um zu bewirken, dass das OSD-Mittel (250) einen Kanalsuchfortschrittsstatus für Teleweb-Information in einem vorausbestimmten Abschnitt des Bildschirms des Displayteils (265) anzeigt, während nach Teleweb-Information gesucht wird.

6. Gerät nach Anspruch 5, wobei der Controller (225) auf ein Auswahlsignal des Benutzereingabemittels (215, 220) reagiert, während die Nummern der Kanäle von Teleweb-Information enthalten, von dem Displayteil (265) angezeigt werden, um den zweiten Tuner (210) zu steuern, um auf den Kanal fein abzustimmen, der von dem Auswahlsignal angegeben ist.

7. Gerät nach Anspruch 6, wobei der Controller (225) konfiguriert ist, um zu bewirken, dass das OSD-Mittel (250) einen Downloadzustand für Teleweb-Information in einem vorausbestimmten Abschnitt des Bildschirms des Displayteils (265) während des Downloadens von Teleweb-Information, die in einem ausgewählten Kanal enthalten ist, anzeigt.

8. Verfahren zum Betreiben eines Fernsehgeräts, Verfahren umfassend das Empfangen eines ersten Fernsehkanals unter Gebrauch eines ersten Tuners (205)
das Empfangen einer Benutzereingabe,
das Reagieren auf die Benutzereingabe durch sequenzielles Feinabstimmen auf jeden einer Vielzahl von Kanälen während einer vorausbestimmten Zeit/unter Verwenden eines zweiten Tuners (210), **dadurch gekennzeichnet,**
**dass**, während der zweite Tuner auf jeden der Vielzahl von Kanälen abgestimmt ist, bestimmt wird, ob Teleweb-Information gegenwärtig ist, und
**dass** eine OSD-Anzeige erzeugt wird, die die Nummern von Kanälen aus der Vielzahl von Kanälen enthält, in welchen Teleweb-Information erfasst wurde.

9. Verfahren nach Anspruch 8, umfassend das Speichern von Nummern von Kanälen, in welchen Teleweb-Information erfasst wurde, das Empfangen einer Benutzereingabe und das Ausführen des Erzeugens der OSD-Anzeige als Reaktion auf die Benutzereingabe, wobei die OSD-Anzeige die gespeicherten Kanalnummern anzeigt.

10. Verfahren nach Anspruch 8, umfassend das Anzeigen von Teleweb-Informations-Kanalsuchfortschrittszuständen als eine OSD-Anzeige in einem vorausbestimmten Abschnitt des Bildschirms des Displayteils (265) während des sequenziellen Feinabstimmens.

11. Verfahren nach Anspruch 10, umfassend das Empfangen einer Benutzerauswahleingabe, die einer Kanalnummer entspricht, die auf der erzeugten OSD-Anzeige angezeigt ist, und das Reagieren auf die Benutzerauswahleingabe durch Feinabstimmen des zweiten Tuners (210) auf den Kanal, der der ausgewählten Kanalnummer entspricht.

12. Verfahren nach Anspruch 11, umfassend das Anzeigen eines Teleweb-Informations-Downloadzustands in einem vorausbestimmten Abschnitt des Bildschirms des Displayteils (265) während des Downloadens von Teleweb-Information, die in dem Kanal enthalten ist, der der Benutzerauswahleingabe entspricht.

## Revendications

1. Un dispositif de réception de télévision ayant une capacité de service d'information, le dispositif comprenant des premiers et des deuxièmes syntoniseurs (205, 210), pour recevoir des émissions de télévision, des moyens de décodeur (245) pour détecter et décoder des signaux de service d'information, des moyens d'entrée de l'utilisateur (215, 220) et un contrôleur (225), **caractérisé par :**
**le fait que** la capacité de service d'information est une capacité de téléweb,
par la présence de moyens OSD, et
**le fait que** le contrôleur (225) réagit à un signal provenant des moyens d'entrée de l'utilisateur (215, 220), pour
provoquer la scrutation, par le deuxième syntoniseur (210) d'une pluralité de canaux pour rechercher de l'information téléweb, et
provoquer l'affichage par les moyens OSD (255) d'une information concernant ladite scrutation.

2. Un dispositif selon la revendication 1, dans lequel le contrôleur (225) réagit à un signal provenant des moyens d'entrée de l'utilisateur (215, 220), pour que le deuxième syntoniseur (210) s'accorde sur un canal particulier pour télécharger de l'information téléweb.

3. Un dispositif selon la revendication 2, dans lequel le contrôleur (225) est configuré pour que les moyens OSD (255) affichent de l'information concernant ledit téléchargement.

4. Un dispositif selon la revendication 1, comprenant une partie de stockage pour stocker le nombre d'au moins un canal, dans lequel de l'information téléweb, détectée par les moyens de décodeur (245), est incluse, dans lequel le contrôleur (225) réagit à un signal provenant des moyens d'entrée de l'utilisateur (215, 220) pour commander les moyens OSD (255) pour afficher les numéros stockés des canaux dans lesquels de l'information téléweb a été détectée.

5. Un dispositif selon la revendication 4, comprenant une partie d'affichage (265), pour afficher de l'information d'image pour un canal sur lequel le premier syntoniseur (205) s'est accordé, et les numéros stockés des canaux dans lesquels de l'information téléweb a été détectée, dans lequel le contrôleur (225) est configuré pour que les moyens OSD (255) affichent un état de progression de recherche d'un canal d'information téléweb dans une partie prédéterminée de l'écran de la partie d'affichage (265) tout en recherchant de l'information téléweb.

6. Un dispositif selon la revendication 5, dans lequel le contrôleur (225) réagit à un signal de sélection provenant des moyens d'entrée de l'utilisateur (215, 220), tandis que les numéros des canaux contenant de l'information téléweb sont affichés par la partie d'affichage (265) pour commander le deuxième syntoniseur (210) pour s'accorder sur le canal indiqué par le signal de sélection.

7. Un dispositif selon la revendication 6, dans lequel le contrôleur (225) est configuré pour que les moyens OSD (250) affichent un état de téléchargement d'information téléweb dans une partie prédéterminée de l'écran de la partie d'affichage (265) durant le téléchargement d'information téléweb incluse dans un canal sélectionné.

8. Un procédé de fonctionnement d'un dispositif de télévision, le procédé comprenant la réception d'un premier canal de télévision en utilisant un premier syntoniseur (205),
recevant une entrée utilisateur,
en réponse à une entrée utilisateur, en effectuant l'accord séquentiel sur chacun d'une pluralité de canaux pour un intervalle de temps prédéterminé, utilisant d'un deuxième syntoniseur (210) ;
et étant **caractérisé par le fait que**,
tandis que ledit deuxième syntoniseur est accordé sur chacun de ladite pluralité de canaux, déterminant si l'information téléweb est présente ; et
générant un affichage OSD incluant les numéros des canaux parmi ladite pluralité de canaux dans laquelle l'information téléweb a été détectée.

9. Un procédé selon la revendication 8, comprenant le stockage des numéros des canaux, dans lequel de l'information téléweb a été détectée, la réception d'une entrée utilisateur et l'accomplissement de la génération dudit affichage OSD en réponse à ladite entrée utilisateur, dans lequel ledit affichage OSD affiche les numéros de canaux stockés.

10. Un procédé selon la revendication 8, comprenant l'affichage d'un état de progression de la recherche de canal d'information téléweb en tant qu'affichage OSD dans une partie prédéterminée de l'écran de la partie d'affichage (265) durant ledit accord séquentiel.

11. Un procédé selon la revendication 10, comprenant la réception d'une entrée de sélection de l'utilisateur, correspondant à un numéro de canal affiché dans ledit affichage OSD généré, et la réponse à l'entrée de sélection de l'utilisateur, par accord du deuxième syntoniseur (210) sur le canal correspondant au numéro de canal sélectionné.

12. Un procédé selon la revendication 11, comprenant l'affichage d'un état de téléchargement d'information téléweb dans une partie prédéterminée de l'écran de la partie d'affichage (265), durant le téléchargement d'information téléweb incluse dans le canal correspondant à l'entrée de sélection de l'utilisateur.
